# EUROPEAN PATENT SPECIFICATION

(11) **EP 2 755 497 B1**
(45) Date of publication and mention of the grant of the patent: **12.09.2018**
(21) Application number: 12775154.3
(22) Date of filing: 13.09.2012
(51) Int. Cl.: A23G 9/04, A23G 9/08, A23G 9/10, A23G 9/12, A23G 9/28

(54) **APPARATUS FOR PREPARING REFRIGERATED PRODUCTS**
VORRICHTUNG ZUR HERSTELLUNG VON GEKÜHLTEN PRODUKTEN
APPAREIL DE PRÉPARATION DE PRODUITS RÉFRIGÉRÉS

(30) Priority: 15.09.2011 IT BO20110070 U
(43) Date of publication of application: 23.07.2014
(73) Proprietor: S.P.M. Drink Systems S.P.A., 41057 Spilamberto (MO) (IT)
(72) Inventor: GRAMPASSI, Enrico, I-41057 Spilamberto (MO) (IT)
(74) Representative: Manzella & Associati
(86) International application number: PCT/EP2012/067973
(87) International publication number: WO 2013/037901

(56) References cited:
- DE-U1- 20 308 396
- US-B1- 6 264 066

## Description

### Technical Field

The present invention regards an apparatus for preparing and dispensing refrigerated products, such as for example creamy ice-creams and the like.

### Background Art

Nowadays apparatuses which allow to prepare and dispense refrigerated products of the type of ice-creams, water ice and the like are known.

Such known apparatuses are generally constituted by a tank suitable to contain the product to be prepared and dispensed, wherein a cooling device for cooling the product to the appropriated temperature and a mixing device which causes the continuous circulation of the product inside the tank are arranged. The circulation device, for example consisting of a screw member driven in rotation according to an axis longitudinal to the tank, is suitable to convey the cooled product towards a front zone, where a dispensing device for the product is arranged. The dispensing device is provided with an obturator element which can be operated by means of an external lever member, for allowing the dispensing of single doses of product, for example to a small cup.

Patent application BO2011A000298 in the name of the Applicant discloses an apparatus suitable for filling containers such as common tubs provided by ice-cream parlours to consumers in different sizes, for containing predetermined quantities of ice-cream. Such apparatus comprises, at the front zone of the containment tank, a dispensing device for the product comprising a conveying member of tubular shape applied axially to said tank and having an outlet opening turned outwards.

A need which outcomes when using such apparatus is that of providing the tub in the correct filling position, beneath the outlet opening for dispensing the product.

DE 203 08 396 U1 discloses a device for dispensing dosed portions of food products, in particular ice cream. The disclosed device comprises a support means connected to a bearing means for a container. The bearing means is movable relatively to the support means between a dispensing position and a removal position.

US 6264 066 B1 discloses a system dispensing a desired portion of frozen product at a uniform rate from a product container containing the frozen product. The product container has a spout and a dispensing valve connected to the spout to seal the product container and to control dispensing of the same product.

### Disclosure

The task of the present invention is that of solving the aforementioned problem, devising an apparatus for preparing refrigerated products which enables to prearrange the container to be filled in the most suitable position.

Another scope of the present invention is that of providing an apparatus for preparing refrigerated products having a simple conception, a securely reliable functioning and versatile use, as well as relatively economic cost.

The cited scopes are attained, according to the present invention, by the apparatus for preparing refrigerated products according to claim 1.

According to the present invention, the apparatus for preparing refrigerated products comprises a support member suitable to support in suspension a container beneath the outlet opening during the product dispensing step. The present invention is defined by the appended claims 1-5.

### Description of Drawings

Details of the invention shall be more apparent from the detailed description of a preferred embodiment of the apparatus for preparing refrigerated products according to the invention, illustrated for indicative purposes in the attached drawings, wherein:

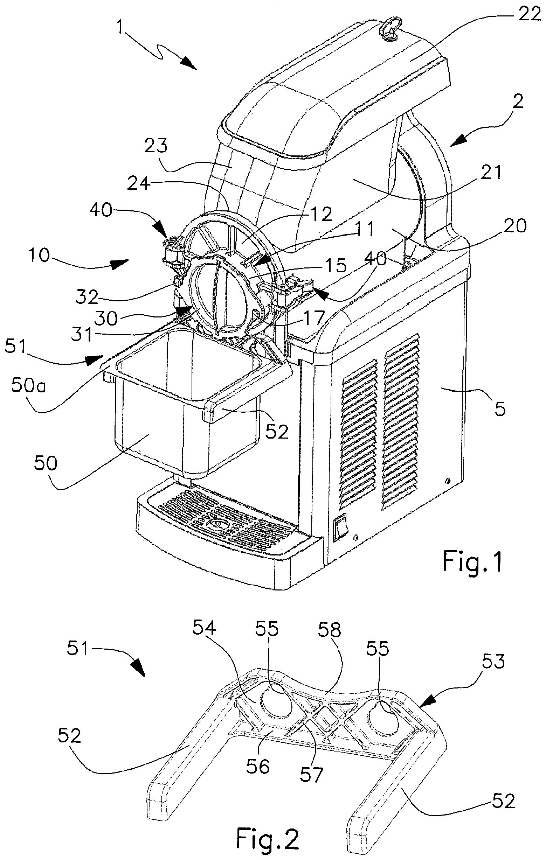

figure 1 shows a perspective view of the apparatus for preparing refrigerated products;

figure 2 shows a perspective view of the support member associated with the apparatus object of the invention.

### Best Mode

With particular reference to such figures, the apparatus for preparing and dispensing refrigerated products such as creamy ice-creams, sorbets and the like according to the invention is indicated in its entirety with 1.

The apparatus 1 comprises a tank 2 for containing the product to be dispensed. Inside the containment tank 2 a mixing device is arranged, in known way, comprising a screw member driven in rotation according to an axis longitudinal to said tank 2 for performing the continuous circulation of the product inside the same tank 2. Moreover inside the tank 2 a cooling device, known per se as well, is arranged for cooling the product to the suitable temperature.

The containment tank 2 is mounted above a base body 5 of substantially prism-shaped profile. The base body 5 is suitable to contain in its inside the actuation members of the apparatus, known per se and not described in more detail.

The containment tank 2 is preferably made of a single mouldable piece of transparent plastic material and has a lower portion 20 having the shape of a cylindrical sector which extends along a substantially horizontal axis and an upper portion 21 which extends from said cylindrical portion 20; in the lower cylindrical portion 20 the cited screw member is coaxially housed, constituting the mixing device which performs the continuous circulation of the product inside the tank 2. The upper portion 21 of the tank 2 is provided in known way with an upper opening suitable to be closed by a lid 22. The upper portion 21 of the tank 2 frontally has a front wall 23 inclined towards the inside of the same tank, for leading towards the rear zone the product which has interacted with the mixing device, so as to avoid stagnation of the product in the upper corners of the tank. Above said inclined wall 23, the lid 22 is provided with a curved portion which is an extension of the same inclined wall 23 of the tank, for allowing the product to change its direction in a gradual manner.

The cylindrical portion 20 of the containment tank 2 is frontally open and shapes a flange 24 along its peripherical rim for fixing a dispensing device 10 for the product.

The dispensing device 10 comprises a conveying member 11 of tubular shape applied axially to the cylindrical portion 20 of the tank 2 and extended outwards of the same tank 2. The conveying member 11 extends from a base plate 12 having substantially the same external profile of the flange 24 of the containment tank 2.

The conveying member 11 shapes an outlet opening 15 turned outwards for dispensing the product. The dispensing opening 15 has a circular profile and is substantially arranged coaxially to the cylindrical portion 20 of the containment tank 2. Suitably the circular profile of the dispensing opening 15 is tangent to the circular profile of the cylindrical portion 20 of the containment tank 2 at the lower generatrix of the same cylindrical portion 20 of the tank. The dispensing opening 15 has a diametrical size similar to that of the cylindrical portion 20 of the tank 2.

The dispensing opening 15 is provided with a closure lid 30 which is removable for dispensing the product towards a container 50 placed below, as specified hereafter. The lid 30 is inserted through a peripheral rim 31 in a seat defined by the dispensing opening. From the peripheral rim 31 of the lid 30 a couple of hooking members 32, in diametrically opposed positions, protrude outwards, being suitable to couple in a fast way with correspondent pegs 17 shaped by the conveying member 11 at the edge of the dispensing opening 15.

The conveying member 11 is applied in a removable manner axially to the cylindrical portion 20 of the containment tank 2 through a couple of hooking members 40 articulated peripherally to the same conveying member 11 and suitable to engage respective hooking seats 41 obtained externally to said tank 2. Suitably the hooking members 40 are arranged in diametrically opposed positions with respect to the conveying member 11.

Beneath the dispensing device 10 a support member 51 is arranged, suitable to support in suspension the container 50 to be filled in the product dispensing step. The support member 51 comprises a fork having a couple of prongs 52 suitable to support edges 50a, turned outwards, of the container 50. The prongs 52 extend from a crossbar 53 suitable to be applied frontally to the apparatus. In particular the crossbar 53 comprises a flat surface 54 on which a couple of suitably spaced holes is made suitable to be engaged by screw elements for fixing the fork to the apparatus. The bottom 54 of the crossbar 53 is surrounded by edges 56 and stiffened by ribs 57. Suitably the upper edge of the crossbar 53 centrally shapes a concave portion 58 which results to be substantially complementary to the circular profile of the dispensing opening 15, in the lower tract of this one, so as to allow the mounting of the fork in a position neared to the same outlet opening 15.

The functioning of the apparatus for preparing refrigerated products, such as creamy ice creams, sorbets and the like, is easy to understand from the preceding description.

After introducing the product in the tank 2, through the upper opening of the tank 2, the preparing cycle for ice-cream is started in known manner.

When it is required, the dispensing of the product is performed through the dispensing device 10. For this purpose, after stopping the rotation of the mixing device, the lid 30 which closes the dispensing opening 15 of the conveying member 11 is removed. At such point, by restarting the mixing device, the product flows through the conveying member 11 of the dispensing device 10. The product which comes out from the dispensing opening 15 is collected in the suitable container 50 arranged beneath the same dispensing opening 15, supported by the support member 50.

In particular, the tank 50 is prearranged on the support member 51 which has a fork profile, with the opposed edges 50a, turned outwards, supported by the prongs 52.

Therefore, the apparatus object of the invention attains the scope of allowing the container to be filled to be placed in the most appropriate position.

Such result is obtained in particular thanks to the use of the fork-shaped support member, which allows to support in suspension the container to be filled, which is consequently placed immediately beneath the dispensing opening for the product.

It is to be observed that the prearrangement of the tub 50 to be filled immediately beneath the dispensing opening 15 assures the correct filling of the same tub, avoiding waste of product, and advantaging the cleanliness of the apparatus.

The apparatus described for indicative purpose is susceptible of numerous modifications and variants according to the different requirements.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Apparatus for preparing refrigerated products, comprising a containment tank (2) suitable to contain the product to be prepared, said tank (2) having a lower portion (20) having the shape of a cylindrical sector which extends along a substantially horizontal axis and an upper portion (21) which extends from said lower portion (20), said upper portion (21) being provided with an upper opening suitable to be closed by a lid (22); a mixing device arranged coaxially inside said lower portion (20) of said tank (2) and suitable to perform the continuous circulation of the product inside the same tank (2), for conveying the product towards a front zone of said lower portion (20) of said tank (2); a cooling device placed inside said tank (2) for cooling said product; a dispensing device (10) for the product, placed at said front zone of the lower portion (20) of the containment tank (2), comprising a conveying member (11) applied axially to said lower portion (20) of the tank (2), communicating with said front zone of the lower portion (20) of the tank (2), and having an outlet opening (15) turned outwards, and a lid (30) for closing said outlet opening (15) of the conveying member (11) which is removable for the fast dispensing of the product towards a container (50) placed below, **characterized in that** it comprises a support member (51) suitable to support in suspension said container (50) beneath said outlet opening (15) of the conveying member (11) during the product dispensing step.

2. Apparatus according to claim 1, **characterized in that** said support member (51) comprises a fork having a couple of prongs (52) suitable to support edges (50a), turned outwards, of said container (50).

3. Apparatus according to claim 2, **characterized in that** said prongs (52) extend from a crossbar (53) suitable to be applied frontally to said apparatus.

4. Apparatus according to claim 3, **characterized in that** said crossbar (53) has a flat bottom (54) on which at least one couple of suitably spaced holes (55) is made, suitable to be engaged by screw elements for fixing to said apparatus.

5. Apparatus according to claim 3 or 4, **characterized in that** said crossbar (53) centrally shapes, along the upper edge, a concave portion (58) substantially complementary to the circular profile of said outlet opening (15) of the conveying member (11).

## Patentansprüche

1. Vorrichtung zur Herstellung von gekühlten Produkten, umfassend einen Behältertank (2), der geeignet ist, um ein aufzubereitendes Produkt zu enthalten, wobei der Tank (2) einen unteren Abschnitt (20), der die Form eines zylindrischen Sektors hat, der sich entlang einer im Wesentlichen horizontalen Achse erstreckt, und einen oberen Abschnitt (21) hat, der sich von diesem unteren Abschnitt (20) erstreckt, wobei der obere Abschnitt (21) mit einer oberen Öffnung versehen ist, die geeignet ist, um durch einen Deckel (22) geschlossen zu werden; eine Mischeinrichtung, die koaxial innerhalb des unteren Abschnitts (20) des Tanks (2) angeordnet ist und geeignet ist, um die kontinuierliche Zirkulation des Produktes innerhalb desselben Tanks (2) durchzuführen, um das Produkt zum vorderen Bereich des unteren Abschnitts (20) des Tanks (2) zu fördern; eine Kühleinrichtung, die innerhalb des Tanks (2) angeordnet ist, um das Produkt zu kühlen; eine Abgabeeinrichtung (10) des Produktes, die an dem vorderen Bereich des unteren Abschnitts (20) des Behältertanks (2) angeordnet ist, die ein Förderelement (11) umfasst, das axial an diesem unteren Abschnitt (20) des Tanks (2) angebracht ist, das mit dem vorderen Bereich des unteren Abschnitts (20) des Tanks (2) kommuniziert, und eine Auslassöffnung (15), die nach außen zugewandt ist, und einen Deckel (30) hat, um die Auslassöffnung (15) des Förderelements (11) zu schließen, der zur schnellen Abgabe des unten platzierten Produkts zum Behälter (50) entfernbar ist, **dadurch gekennzeichnet, dass** sie ein Halteelement (51) umfasst, das geeignet ist, um während des Schritts der Abgabe des Produkts den Behälter (50) unter der Auslassöffnung (15) des Förderelements (11) hängend zu halten.

2. Vorrichtung nach Anspruch 1, **dadurch gekennzeichnet, dass** das Halteelement (51) eine Gabel umfasst, die ein Paar von Zacken (52) hat, welche geeignet sind, um nach außen zugewandte Kanten (50a) des Behälters (50) zu halten.

3. Vorrichtung nach Anspruch 2, **dadurch gekennzeichnet, dass** sich die Zacken (52) von einem Querstab (53) erstrecken, der geeignet ist, um frontseitig an der Vorrichtung angebracht zu werden.

4. Vorrichtung nach Anspruch 3, **dadurch gekennzeichnet, dass** der Querstab (53) einen flachen Boden (54) hat, auf dem sich zumindest ein Paar von passend beabstandeten Löchern (55) befinden, die geeignet sind, um durch Schraubenelemente zum Befestigen an der Vorrichtung einzugreifen.

5. Vorrichtung nach Anspruch 3 oder 4, **dadurch gekennzeichnet, dass** der Querstab (53) zentral, entlang der oberen Kante, einen konkaven Abschnitt (58) bildet, der im Wesentlichen komplementär zum kreisförmigen Profil der Auslassöffnung (15) des Förderelements (11) ist.

## Revendications

1. Appareil de préparation de produits réfrigérés, comprenant un réservoir de contenance (2) apte à contenir un produit à préparer, ledit réservoir (2) ayant une portion inférieure (20) qui a la forme d'un secteur cylindrique s'étendant le long d'un axe substantiellement horizontal et une portion supérieure (21) s'étendant de la portion inférieure (20), la portion supérieure (21) étant pourvue d'une ouverture supérieure apte à être fermée par un couvercle (22); un dispositif de mélange disposé coaxialement à l'intérieur de ladite portion inférieure (20) dudit réservoir (2) et apte à effectuer la circulation continue du produit à l'intérieur du même réservoir (2), pour acheminer le produit vers une zone frontale de ladite portion inférieure (20) dudit réservoir (2); un dispositif de refroidissement disposé à l'intérieur dudit réservoir (2) pour refroidir ledit produit; un dispositif de distribution (10) du produit, disposé dans ladite zone frontale de ladite portion inférieure (20) du réservoir de contenance (2), comprenant un organe transporteur (11) appliqué axialement à ladite portion inférieure (20) du réservoir (2), communiquant avec ladite zone frontale de la portion inférieure (20) du réservoir (2), et ayant une ouverture de sortie (15) tournée à l'extérieur, et un couvercle (30) pour fermer ladite ouverture de sortie (15) de l'organe transporteur (11) qui est amovible pour la distribution rapide du produit vers un récipient (50) placé en dessous, **caractérisé en ce qu'**il comprend un organe de support (51) apte à supporter en suspension ledit récipient (50) sous ladite ouverture de sortie (15) de l'organe transporteur (11) pendant l'étape de distribution du produit.

2. Appareil selon la revendication 1, **caractérisé en ce que** ledit organe de support (51) comprend une fourche ayant un couple de dents (52) aptes à supporter les bords (50a), tournés à l'extérieur, dudit récipient (50).

3. Appareil selon la revendication 2, **caractérisé en ce que** lesdits dents (52) s'étendent d'une traverse (53) apte à appliquer frontalement audit appareil.

4. Appareil selon la revendication 3, **caractérisé en ce que** ladite traverse (53) possède un fond plat (54) sur lequel est situé au moins un couple de trous (55) espacés de façon appropriée, conçus pour se mettre en prise par des éléments à vis pour fixer ledit appareil.

5. Appareil selon la revendication 3 or 4, **caractérisé en ce que** ladite traverse (53) forme centralement, le long du bord supérieur, une portion concave (58) substantiellement complémentaire au profil circulaire de ladite ouverture de sortie (15) de l'organe transporteur (11).
